# EUROPEAN PATENT APPLICATION

(11) **EP 4 057 207 A1**
(43) Date of publication of application: **14.09.2022**
(21) Application number: 22160600.7
(22) Date of filing: 07.03.2022
(51) Int. Cl.: G06Q 30/00, G06Q 30/02, G06Q 30/06, G06Q 40/06

(54) **METHODS AND SYSTEMS FOR GENERATING AN INTERACTIVE GRAPHICAL USER INTERFACE DETAILING MISSION-VALUE DATA**

(30) Priority: 12.03.2021 US 202117199961
(71) Applicant: Capital One Services, LLC, McLean, VA 22102 (US)
(72) Inventor: SHETH, Ashay, McLean, 22102 (US); REHMAN, Rubab, McLean, 22102 (US); SMITH, Zachary, McLean, 22102 (US); RAMEZANLI, Sam, McLean, 22102 (US); KIM, Eunji, McLean, 22102 (US); ZARRAS, Benjamin, McLean, 22102 (US)
(74) Representative: Haseltine Lake Kempner LLP

(57) **Abstract**

A computer-implemented method may include: receiving electronic interaction data associated with a user, the electronic interaction data corresponding to a plurality of interactions between the user and a plurality of interaction partners; identifying a plurality of interaction identifiers associated with the plurality of interaction partners; retrieving, from a plurality of databases, using the plurality of interaction identifiers, mission-value data for each of the plurality of interaction partners, the retrieved data associated with a mission of interest to the user; identifying which of the plurality of interaction partners align with the mission of interest to the user; and generating an interactive graphical user interface (GUI) for display at a user computing device, the interactive GUI including a section displaying the plurality of interactions and the plurality of interaction partners, the section identifying each of the plurality of interaction partners that align with the mission of interest to the user.

## Description

### TECHNICAL FIELD

Various embodiments of the present disclosure relate generally to data processing, and, more particularly, to assessing a user's spending in the context of the user's beliefs and values, and to generating an interactive graphical user interface (GUI) detailing the assessment.

### BACKGROUND

There is a growing push for more conscious consumption, and to be more aware of how one's consumption choices impact society. In particular, many people are interested in learning how they can financially support entities that align with their individual values and beliefs. More people want to consciously support entities that, for example, are committed to specific ethical, social, and/or environmental causes that they identify with. Researching the values and missions of each entity that one may be interested in interacting with may be time consuming and difficult. Keeping up with an entity's evolving values and missions may also be overwhelming. Further, researching new entities and/or new causes and issues that one may be interested in may be laborious. Thus, people interested in conscious consumption may be thwarted by the sheer amount of research and time that this process requires.

Accordingly, it is desirable to provide, to those interested in conscious consumption, a simplified tool that not only automatically identifies entities of interest, but also provides customized analytics and recommendations configured to help a person engage with entities they identify with, and become a more conscious consumer. Thus, improvements in technology relating to facilitating the presentation of user-specific consumption data in the context of one's beliefs and/or views are needed.

The present disclosure is directed to addressing one or more of the above-referenced challenges. The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, methods and systems are disclosed for providing an interactive graphical user interface (GUI) detailing mission-value data to a user.

In one aspect, a computer-implemented method of providing an interactive graphical user interface (GUI) detailing mission-value data for a user associated with a user computing device may include: receiving, by at least one processor, electronic interaction data associated with the user, the electronic interaction data corresponding to a plurality of interactions between the user and a plurality of interaction partners; identifying, by the at least one processor, based on the electronic interaction data, a plurality of interaction identifiers associated with the plurality of interaction partners; retrieving, from a plurality of databases, using the plurality of interaction identifiers, mission-value data for each of the plurality of interaction partners, the retrieved data associated with a mission of interest to the user; identifying, by the at least one processor, based on the retrieved data, which of the plurality of interaction partners align with the mission of interest to the user; and generating the interactive GUI for display at the user computing device, the interactive GUI including a section displaying the plurality of interactions and the plurality of interaction partners, the section identifying each of the plurality of interaction partners that align with the mission of interest to the user.

In another aspect, a system for providing an interactive graphical user interface (GUI) detailing on mission-value data for a user associated with a user computing device may include: a memory storing instructions and at least one processor configured to execute the instructions to perform operations. The operations may include: receiving electronic interaction data associated with the user, the electronic interaction data corresponding to a plurality of interactions between the user and a plurality of interaction partners; identifying, based on the electronic interaction data, a plurality of interaction identifiers associated with the plurality of interaction partners; retrieving, from a plurality of databases, using the plurality of interaction identifiers, mission-value data for each of the plurality of interaction partners, the retrieved data associated with a mission of interest to the user; identifying, based on the retrieved data, which of the plurality of interaction partners align with the mission of interest to the user; and generating the interactive GUI for display at the user computing device, the interactive GUI including a section displaying the plurality of interactions and the plurality of interaction partners, the section identifying each of the plurality of interaction partners that align with the mission of interest to the user.

In yet another aspect, a computer-implemented method of providing an interactive graphical user interface (GUI) detailing mission-value data for a user associated with a user computing device may include: generating, by at least one processor, the interactive GUI for display at the user computing device, the GUI displaying a plurality of missions of interest for selection by the user; receiving, by the at least one processor, via the GUI, a user selection of a subset of the plurality of missions of interest; receiving, by the at least one processor, electronic interaction data associated with the user, the electronic interaction data corresponding to a plurality of recent interactions between the user and a plurality of interaction partners; identifying, by the at least one processor, based on the electronic interaction data, a plurality of interaction identifiers associated with the plurality of interaction partners; retrieving, from a plurality of databases, for each mission of interest of the subset, mission-value data for the plurality of interaction partners; identifying, by the at least one processor, based on the retrieved data, one or more interaction partners of the plurality of interaction partners that align with each mission of interest of the subset; and causing display, at the user computing device, via the GUI, of the plurality of interactions and the plurality of interaction partners, wherein the one or more interaction partners are accompanied by a plurality of symbols, each of the plurality of symbols associated with a corresponding mission of interest of the subset.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure, according to one or more embodiments.
FIGS. 2A-2C depict exemplary screens of an interactive graphical user interface (GUI) detailing mission-value data, according to one or more embodiments.
FIG. 3 depicts an exemplary flowchart of a method of providing an interactive GUI detailing mission-value data, according to one or more embodiments.
FIG. 4 depicts another exemplary flowchart of an additional method of providing an interactive GUI detailing mission-value data, according to one or more embodiments.
FIG. 5 depicts an exemplary computing device, according to one or more embodiments.

### DETAILED DESCRIPTION OF EMBODIMENTS

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ±10% of a stated or understood value.

The term "user", "individual", and the like generally encompasses consumers who interact with one or more interaction partners to purchase a good and/or a service. The term "interaction partner" may indicate, and may be used interchangeably with, a merchant of items or services, a seller of items or services, a vendor of items or services, etc. The term "interactions" generally refers to transactions between a user and an interaction partner. The term "interaction data", "electronic interaction data" and the like generally encompasses transaction data for transactions between a user and an interaction partner.

The term "mission of interest" or "missions of interest" generally encompasses causes or issues of interest to the user, including, but not limited to, issues of best practice, transparency, as well as social, ethical, and/or environmental causes. Additionally or alternatively, the term "mission of interest" may encompass specific focuses or goals of interaction partners that may be of interest to the user, such as, for example, innovation or specific industry trends or practices (e.g., farm to table movement). The term "mission-value data" generally encompasses information regarding the mission(s) of interest selected by a user. The information may include verifiable, publically available benchmarking indices, such as, for example, information from the Human Rights Campaign (HRC) Corporate Equality Index, the Diversity Best Practices (DBP) Inclusion Index, and/or the Climate Counts Company Scorecard. Mission-value data may also include publically available data that provides insight as to an interaction partner's missions and values, such as, for example, publically available articles, press releases, reviews, and/or donation information (e.g., donations to non-profit organizations, causes, and/or political organizations).

In the following description, embodiments will be described with reference to the accompanying drawings. As will be discussed in more detail below, in various embodiments, systems and methods for generating an interactive graphical user interface (GUI) detailing mission-value for a user are described.

In an exemplary use case, a user may download an application that provides an interactive GUI. The application may be associated with a financial institution. When the user opens the application, the GUI may provide a list of the user's most recent interactions using an interaction instrument (e.g., financial instrument) associated with the application. The interactive GUI may display symbol(s) next to one or more interactions under the recent interactions list to show which recent interaction partners align with the user's chosen mission of interest. The user may choose one or more missions of interest when the user enrolls (e.g., registers) for this feature. For example, the user may be presented with a menu of options from which the user can select one or more missions of interest. The missions of interest may include issues and causes that the user may identify with, including, for example, LGBTQ+ equality and inclusion, sustainability, fair labor conditions, fair wages, fair trade, climate change, corporate responsibility, and/or ecofriendly practices.

The list of recent transactions may be updated in real time or in near real time to identify, using symbols, the specific interaction partners that align with the user's chosen mission(s) of interest. The user may select a symbol or icon to visually represent the user's chosen mission of interest in the GUI. If the user has multiple missions of interest, the user may select a symbol for each mission of interest. For example, if the user's chosen mission of interest is LGBTQ+ equality and inclusion, the user may select a rainbow flag as the corresponding symbol. In the exemplary embodiment, the interactive GUI may also include a section explaining each mission of interest. The user may interact with this section to learn about how the user's spending aligns with the user's chosen mission of interest. For example, the GUI may provide analytics that track the user's spending over a period of time. The GUI may provide graphs, charts, and/or tables that show a trend or a pattern of the user's spending with respect to one or more missions of interest. In some embodiments, the dashboard may provide a visual representation of a total number of interactions, within a period of time, that align with a chosen mission of interest. For example, the user may view a graph or a chart for a particular period of time. In another example, the user may view visual representation(s) detailing the user's interactions across multiple missions of interest for a particular period of time.

In some embodiments, when the user selects a particular interaction from the list of recent interactions, the interactive GUI may provide performance and practice data (e.g., hereinafter referred to as "performance data") of the interaction partner identified in the interaction. More specifically, the GUI may provide specific performance data with respect to the user's chosen mission of interest, to allow the user to learn about how the interaction partner aligns with the mission of interest. The GUI may provide metrics used to assess the interaction partner's performance, such as specific considerations and sub-considerations evaluated by a verifiable, third party benchmarking tool. By allowing the user to view the performance data and metrics associated with an interaction partner (when the user interacts with the corresponding interaction from the recent interactions list), the GUI enables the user to learn about how their recent interaction aligns with their selected mission of interest. The interactive GUI may also provide Uniform Resource Locators (URLs) to allow the user to learn more about a specific interaction partner, benchmarking tool, and/or a specific consideration (or sub-consideration) assessed.

In some embodiments, the interactive GUI may provide recommendations to interact with alternative interaction partners. For example, if the user frequents an interaction partner that does not align with the user's chosen mission of interest, the interactive GUI may provide a recommendation to visit a comparable interaction partner within the user's vicinity that does align with the user's chosen mission of interest. In other embodiments, the interactive GUI may provide suggestions to track additional missions of interest based on the user's interaction data and/or the user's currently selected mission(s) of interest. For example, if the user's chosen mission of interest is environmental impact, the interactive GUI may suggest selecting an additional mission of interest to track, such as energy conservation.

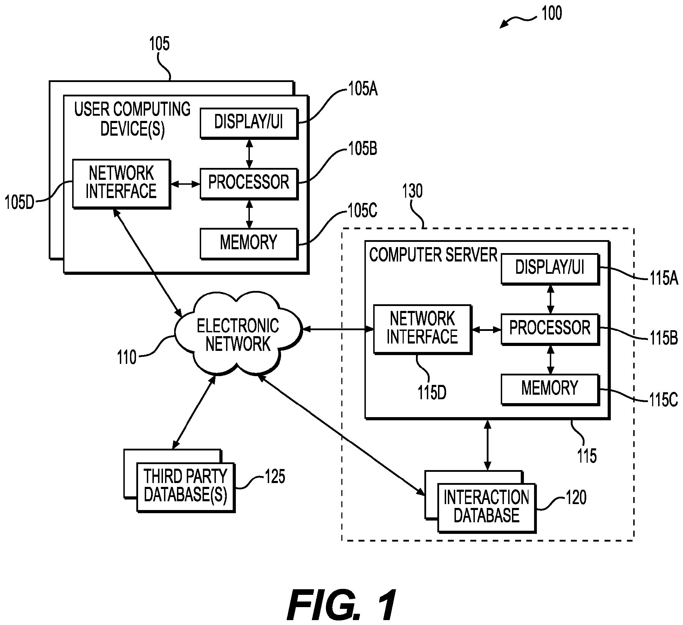

FIG. 1 is a diagram depicting an exemplary block diagram of a system environment 100 for detailing mission-value data according to one or more embodiments of the present disclosure. The system environment 100 may include one or more user computing devices 105 operated by users (not shown), an electronic network 110, a computer server 115, an interaction database 120, and one or more third party databases 125. Hereafter, while the server 115 may interact with one or a plurality of the one or more user computing devices 105, this description will refer to the one or more user computing devices 105 as "the user computing device 105," so as to simplify the description of the concepts described herein. One of skill in the art would recognize that the server 115 may configure the one or more user computing devices 105 so as to experience different functionalities and/or have access to different information (e.g., determined by credentials such as user ID/password).

The user device 105, the server 115, the database 120 and/or the third party databases 125 may be connected via the network 110, using one or more standard communication protocols. The server 115 may be an issuer server configured to receive interaction data (e.g., transaction data) over the network 110 from a point-of-sale (POS) system (not shown). This transmission of the interaction data to the server 115 via the network 110 may be a direct transmission or an indirect transmission (e.g., an initial transmission to an intermediary such as a card association system, followed by the intermediary transmitting at least a portion of the data to the server 115). The interaction data (e.g., transaction data) received by the server 115 may include a time stamp of the interaction (e.g., transaction), an identification of one or more interaction partners (e.g., merchants) associated with the interaction, an identification of one or more purchasers associated with the interaction, an identification of one or more interaction instruments (e.g., a credit card, a debit card, etc.) used in the interaction, and/or any other data relevant to the interaction. The server 115 may store the interaction data received over the network 110 in the interaction database 120. The interaction database 120 may be a database associated with an issuer.

In one or more embodiments, the computer server 115 and the interaction database 120 may be one server computer device and a single database, respectively. Alternatively, in one or more embodiments, the server 115 may be a server cluster, or any other collection or network of a plurality of computer servers. The interaction database 120 also may be a collection of a plurality of interconnected databases. The server 115 and the interaction database 120 may be components of one server system. Additionally, or alternatively, the server 115 and the interaction database 120 may be components of different server systems, with the network 110 serving as the communication channel between them. The computer server 115 and the interaction database 120 may be associated with an entity 130, such as an issuer. The computer server 115 and the interaction database 125 may collectively be referred to as an entity system, such as an issuer system.

As shown in FIG. 1, the computer server 115 may be in communication with the user device 105 to transmit and receive messages from each other across the network 110. The user device 105 may be associated with a user capable of engaging in purchase interactions using an interaction instrument (e.g., a credit card, a debit card, etc.). The network 110 may comprise one or more networks that connect devices and/or components of environment 100 to allow communication between the devices and/or components. For example, the network 110 may be implemented as the Internet, a wireless network, a wired network (e.g., Ethernet), a local area network (LAN), a Wide Area Network (WANs), Bluetooth, Near Field Communication (NFC), or any other type of network that provides communications between one or more components of environment 100. In some embodiments, the network 110 may be implemented using cell and/or pager networks, satellite, licensed radio, or a combination of licensed and unlicensed radio. The network 110 may be associated with a cloud platform that stores data and information related to methods disclosed herein.

The user computing device 105 may include a display/user interface (Ul) 105A, a processor 105B, a memory 105C, and/or a network interface 105D. The user computing device 105 may be a computer, a cell phone, a tablet, etc. The user computing device 105 may execute, by the processor 105B, an operating system (O/S) and at least one application (each stored in memory 105C). The application may be a browser program or a mobile application program (which may also be a browser program in a mobile O/S). The application may generate one or more interactive graphic user interfaces (GUIs) based on instructions/information received from the server 115. In some embodiments, the application may generate one or more interactive GUIs based on instructions/information stored in the memory 105C. The interactive GUIs may be application GUIs for the application executed based on XML and Android programming languages or Objective-C/Swift, but one skilled in the art would recognize that this may be accomplished by other methods, such as webpages executed based on HTML, CSS, and/or scripts, such as JavaScript. The display/UI 105A may be a touch screen or a display with other input systems (e.g., mouse, keyboard, etc.). The network interface 105D may be a TCP/IP network interface for, e.g., Ethernet or wireless communications with the network 110. The processor 105B, while executing the application, may receive user inputs from the display/UI 105A, and perform actions or functions in accordance with the application.

The computer server 115 may include a display/UI 115A, a processor 115B, a memory 115C, and/or a network interface 115D. The server 115 may be a computer, system of computers (e.g., rack server(s)), and/or or a cloud service computer system. The server 115 may execute, by the processor 115B, an operating system (O/S) and at least one instance of a server program (each stored in memory 115C). The server 115 may store or have access to information from user data databases 120 and third party databases 125. The display/UI 115A may be a touch screen or a display with other input systems (e.g., mouse, keyboard, etc.) for an operator of the server 115 to control the functions of the server 115 (e.g., update the server program and/or the server information). The network interface 115D may be a TCP/IP network interface for, e.g., Ethernet or wireless communications with the network 110. The server program, executed by the processor 115B on the server 115, may be configured to identify interaction partners that align with a user's mission(s) of interest, as will be described in further detail below.

The interaction database 120 may store data associated with the user and the user's interaction instrument in addition to the interaction data described above. For example, the interaction database 120 may store financial data associated with an interaction instrument, including the user's credit card balance, available balance, and/or payment history. The interaction database 120 may also store data received from the user's user computing device 105, including mission(s) of interest selected by the user and real time and/or near real time location data (e.g., GPS data) of the user computing device 105. The interaction database 120 may also store recommendations and/or user analytics generated by the server 115.

The computer server 115 may access a user's selected mission(s) of interest and interactions data from the interaction database 120 to identify one or more interaction partners that align with the user's mission(s) of interest. In some embodiments, the information described above may be stored in a plurality of user profiles within the interaction database 120. Each user profile may correspond to each user (user computing device 105) in communication with the server 115. In these embodiments, the user profiles may be updated to reflect a corresponding user's recent interactions as well as any changes to the user's mission(s) of interest.

In the system environment 100, the computer server 115 may retrieve mission-value data for one or more interaction partners identified in a user's interaction data from the third party databases 125. The third party databases 125 may be publically available databases that collect and store mission-value data associated with interaction partners. The third party databases 125 may be associated with one or more third party organizations that provide benchmarking and performance data for interaction partners with respect to one or more missions of interest, such as, for example, the Human Rights Campaign (HRC) Corporate Equality Index. In some embodiments, the server 115 may store the retrieved mission-value data in the interaction database 120. In some embodiments, the server 115 may update a user's profile to indicate that one or more interaction partners associated with the user align with the user's mission(s) of interest.

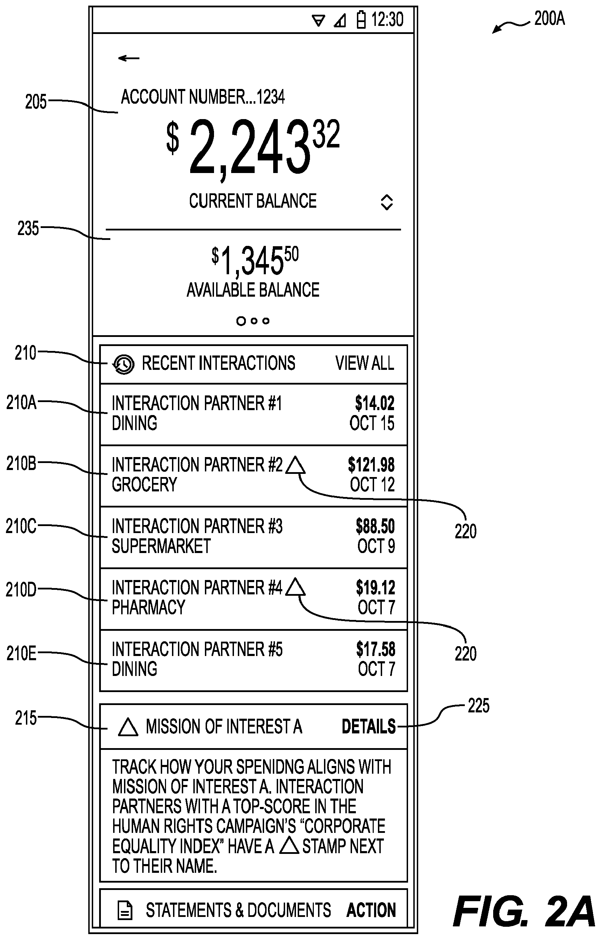

FIGS. 2A-2C depict exemplary screens 200A-200C of an interactive graphical user interface (GUI) detailing mission-value data, according to one or more embodiments of the present disclosure. The interactive GUI may be generated by the computer server 115 for display at the user's user computing device 105 (FIG. 1). Exemplary screen 200A illustrates a first section 205, a second section 210, and a third section 215. The first section 205 may provide data associated with an interaction instrument used by the user to interact with interaction partners. In the illustrated embodiment, the first section 205 includes the last four digits of an account number associated with the user's interaction instrument, an outstanding current balance, and an available balance. The second section 210 may provide recent interaction listings 210A-210E of the user. As explained in detail below, the user may interact with each recent interaction listing 210A-210E displayed on the interactive GUI to view additional information associated with each listing 210A-210E.

Each recent interaction listing 210A-210E provides information associated with a recent interaction between the user and an interaction partner. Each interaction listing 210A-210E may provide an interaction partner (e.g., interaction partner #1, interaction partner #2, interaction partner #3, interaction partner #4, interaction partner #5), a category of service or goods for the interaction partner (e.g., dining, grocery, travel, gas, pharmacy), an interaction date (e.g., a date associated with when the interaction is posted), and/or an interaction amount (e.g., the amount paid to the interaction partner for the interaction).

In the illustrated embodiment, a symbol representing the user's mission of interest, such as symbol 220, is provided for the interaction listings 210A-210E where the interaction partner aligns with the user's selected mission of interest. As shown in FIG. 2A, symbol 220 is displayed in interaction listing 210B next to interaction partner #2 and in interaction listing 210D next to interaction partner #4. The symbol 220 facilitates identification of the recent interaction partners that align with the user's selected mission of interest.

The third section 215 provides information regarding the mission of interest associated with the symbol 220. In the illustrated embodiment, the user's selected mission of interest is labeled "Mission of Interest A." For example, "Mission of Interest A" may be LGBTQ+ equality and inclusion. In FIG. 2A, "Mission of Interest A" is represented by symbol 220. The symbol 220 may be any shape, symbol, color and/or icon selected by the user to visually represent a mission of interest to the user. In various embodiments, the user may select multiple missions of interest to track (e.g., "Mission of Interest A," "Mission of Interest B," and Mission of Interest C"). Information regarding each mission of interest may be displayed in subsections (not shown) of the third section 215. Alternatively, the third section 215 may include an overview (or summary) of all the missions of interest tracked by the user. In embodiments where the user selects multiple missions of interest, the user may designate a symbol for each mission of interest. Thus, multiple symbols may appear in listings 210A-210E next to recent interaction partners that align with two or more missions of interest in the second section 210.

The third section 215 may include a tab 225 that, when selected by the user, displays additional information associated with a mission of interest. The interactive GUI may provide analytics that enables the user to track how their spending aligns with a specific mission of interest, such as "Mission of Interest A." For example, the interactive GUI may provide a graph or a chart that tracks the user's spending with respect to the user's selected mission(s) of interest over a period of time. In another example, the interactive GUI may provide additional analytics detailing how often the user visits and/or spends at a particular interaction partner and/or whether this interaction partner aligns with the user's selected mission(s) of interest.

In some embodiments, recommendations to visit alternative or additional interaction partners may be provided to the user via the interactive GUI. In these embodiments, if the server 115 determines that the user frequents an interaction partner that does not align with the user's selected mission(s) of interest, the server 115 may search for and recommend an alternative interaction partner that aligns with the user's selected mission(s) of interest. The recommendation may be based on factors including, for example, category of good or service, specific product or service offerings, distance (e.g., zip code), and/or customer reviews. For example, the server 115 may determine, from the user's interaction data, that the user frequents "Interaction Partner #1" (shown in listing 210A), which is a dining establishment. The server 115 may also determine, from analyzing mission-value data associated with "Interaction Partner #1," that this particular interaction partner does not align with the user's selected mission of interest. The server 115 may identify specific food offerings provided by "Interaction Partner #1" and locate one or more alternative interaction partners that (i) provide comparable food offerings and (ii) align with the user's selected mission(s) of interest.

The server 115 may locate alternative interaction partners by analyzing and comparing data retrieved from third party databases 125 (FIG. 1), such as publically available databases. The server 115 may retrieve mission value data associated with the alternative interaction partners to determine whether they align with the user's mission of interest. In these embodiments, the server 115 may generate recommendations to visit the alternative interaction partners and display the generated recommendations via the interactive GUI when the user interacts with the listing 210A associated with "Interaction Partner #1." For example, the interactive GUI may display a message notifying the user of an alternative interaction partner when the user selects listing 210A (e.g., "Based on your recent visit to "Interaction Partner #1," you may be interested in visiting "Alternative Interaction Partner #1," which aligns with your selected mission of interest.").

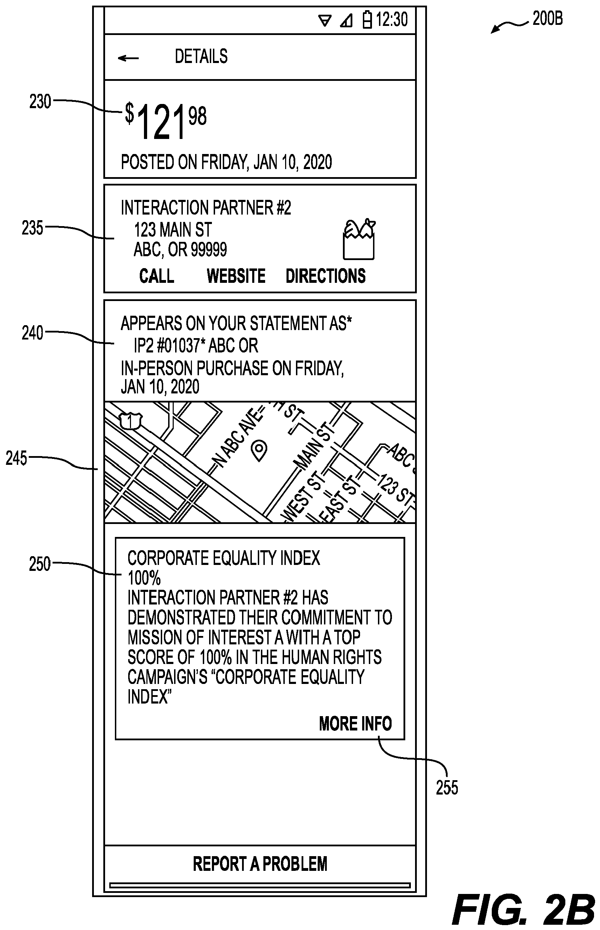

As discussed above, the user may interact with one or more recent interaction listings 210A-210E provided in the second section 210. When the user selects a recent interaction listing 210A-210E, the server 115 may instruct the user's user computing device 105 to display a corresponding interactions details screen, such as the exemplary screen 200B shown in FIG. 2B. FIG. 2B provides an interaction details screen for the recent interaction listing 210B with "Interaction Partner #2". More specifically, screen 200B may provide sections of interaction details. The interaction details may include, for example, an interaction amount 230 posted to the user's account, a corresponding interaction posting date, and contact information 235 associated with the interaction partner (e.g., "Interaction Partner #2") including an address, a phone number, a website, and/or directions.

The interactions details screen 200B may indicate whether the interaction was in-person or online, and may also provide an interaction identifier 240 that identifies the interaction partner and a location associated with the interaction. In the illustrated embodiment, screen 200B identifies the interaction as an in-person interaction and provides the interaction identifier 240 as "IP2#0137*ABC OR". The interaction identifier 240 includes an interaction partner identifier (e.g., "IP2"), a store number associated with the interaction partner (e.g., "1037"), and a location of the interaction partner's store (e.g., city "ABC" of state "OR"). In certain embodiments, the interaction partner identifier may be a merchant identifier (MID). In various embodiments, the interaction identifier 240 may include more or less information than the interaction identifier 240 shown in screen 200B. Screen 200B may also include an interactive map 245 of the interaction location.

Screen 200B may also include a performance section 250 that displays performance information of the interaction partner with respect to the user's selected mission of interest. The performance information may be measured by third party benchmarking and performance tools, such as ethical and/or sustainability indices for corporations or businesses. In the illustrated embodiment, the performance section 250 provides the Corporate Equality Index score for "Interaction Partner #2." Based on the user's selected mission(s) of interest, the performance section 250 may provide relevant performance information demonstrating the interaction partner's commitment to the user's selected mission(s) of interest. For example, the performance section 250 may display a score and/or an indication provided by one or more local, national, and/or international third party benchmarking tools, such as, for example, environmental, ethical, social, and/or corporate governance indices. In embodiments where an interaction partner satisfies multiple missions of interest (of the user), the performance section 250 may display the interaction partner's performance information for each mission of interest. Screen 200B may include a tab 255 that, when selected (by the user), provides additional information associated with the interaction partner's performance.

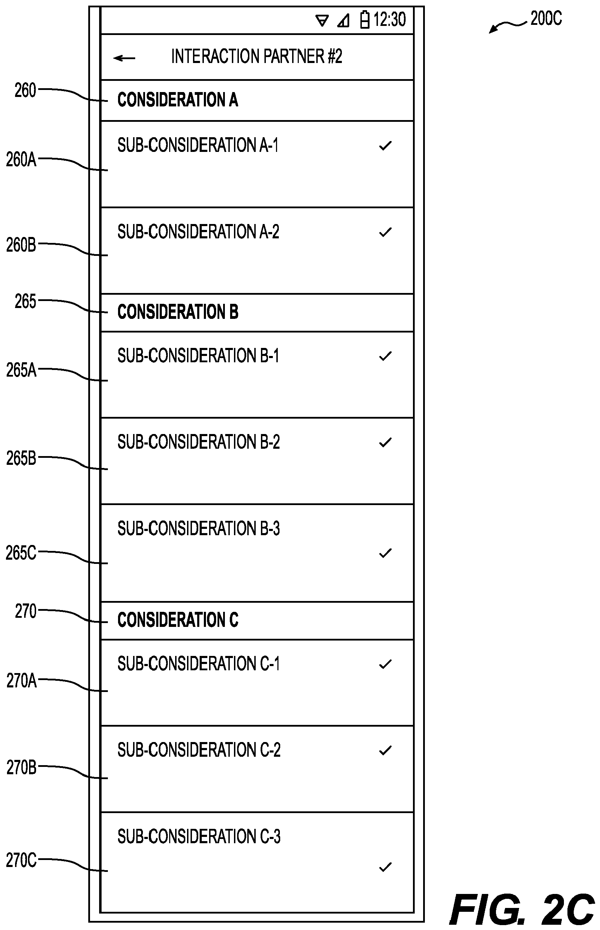

FIG. 2C provides an exemplary screen 200C that includes a list of considerations (e.g., considerations 260, 265, 270) and sub-considerations (e.g., sub-considerations 260A-260B, 265A-265C, 270A-270C) used to evaluate an interaction partner's performance with respect to the user's mission of interest. In one embodiment, if the user wishes to view the considerations and sub-considerations used to determine the interaction partner's performance, as provided in the performance section 250 (FIG. 2B), the user may select the tab 255 on screen 200B. When the user selects the tab 255 on screen 200B, the server 115 may instruct the user's user computing device 105 to display screen 200C. In some embodiments, one or more of screens 200A-200C may link to an external information source providing the user with additional information such as, for example, the rating index used to rate an individual interaction partner. In these embodiments, one or more of screens 200A-200C may display a message directing the user to the additional information (e.g., "for more information, see X").

In the illustrated embodiment, screen 200C provides the considerations used by a third party benchmarking tool to evaluate the performance of "Interaction Partner #2" with respect to the user's selected mission of interest (e.g., "Mission of Interest A" shown in FIG. 2A). Screen 200C may provide a number of sub-considerations assessed for each consideration. The sub-considerations satisfied by "Interaction Partner #2" may be denoted with a symbol, such as, for example, a check mark.

For example, the user's selected mission of interest, "Mission of Interest A", may be LGBTQ+ equality and inclusion. In this example, the considerations shown FIG. 2C may be criteria specific to evaluating the performance of "Interaction Partner #2" with respect to LGBTQ+ equality and inclusion in the workplace. The considerations 260, 265, 270 may be workforce protections, inclusive benefits, and support of an inclusive culture and corporate social responsibility.

The interactive GUI may display the sub-considerations used to evaluate the interaction partner's performance with respect to each consideration. For example, if consideration 260 is workforce protections, sub-considerations 260A and 260B may assess whether "Interaction Partner #2" prohibits discrimination based on sexual orientation or gender identity for all operations. In another example, if consideration 265 is inclusive benefits, sub-considerations 265A-265C may assess whether "Interaction Partner #2" provides equal health care coverage for transgender individuals, same-sex spousal partners, and/or different-sex domestic partners.

In another example, if consideration 270 is support of an inclusive culture and corporate social responsibility, sub-considerations 270A-270C may assess the commitment of "Interaction Partner #2" to LGBTQ+ and diversity training, outreach, and/or engagement programs. In some embodiments, the interactive GUI provides information associated with the third party organization that provides the performance information. For example, the interactive GUI may provide a Uniform Resource Locator (URL) directing the user to the third party organization's website. Screen 200C may provide more or less considerations and/or sub-considerations depending on the user's mission of interest. Accordingly, screen 200C allows the user to easily find information associated with an interaction partner's performance in one place.

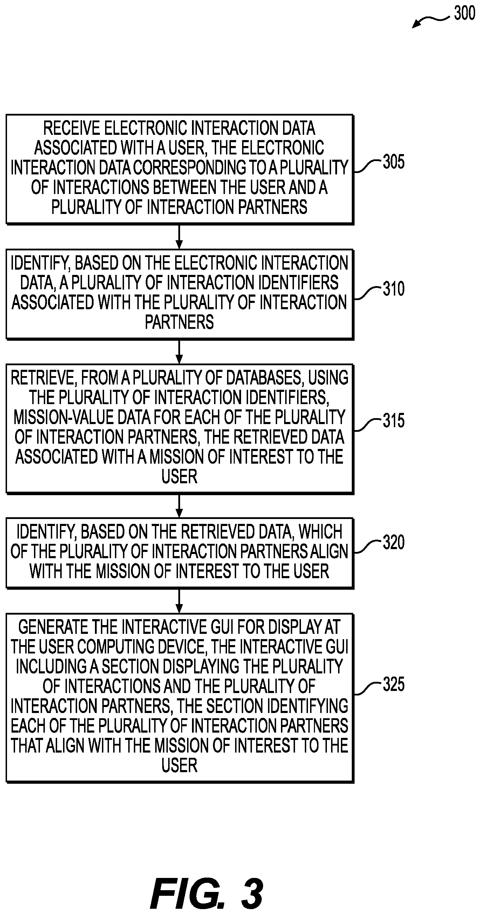

FIG. 3 is a flowchart illustrating a method 300 of providing an interactive GUI (as shown in FIGS. 2A-2C) detailing mission-value data for a user associated with the user computing device 105 (FIG. 1), according to one or more embodiments of the present disclosure. The method 300 may be performed by computer server 115 (FIG. 1). Step 305 may include receiving, by at least one processor, electronic interaction data associated with the user. The computer server 115 may receive the electronic interaction data over the network 110 (FIG. 1) from an intermediary, such as a card processing system. The received electronic interaction data may be stored in a database, such as interaction database 120 (FIG. 1).

The electronic interaction data may correspond to a plurality of interactions between the user and a plurality of interaction partners. In one embodiment, the electronic interaction data may correspond to interactions for a specific time period, such as, for example, the most recent interactions of the user. The electronic interaction data may include, for each of the plurality of interactions, an interaction identifier (e.g., a transaction identifier), an interaction partner identifier, an interaction type (e.g., in-store interaction or online interaction), an interaction partner store identifier (e.g., store number and/or address), an interaction amount (e.g., a transaction amount), a category associated with the item or service purchased (e.g., dining, gas, travel, grocery, entertainment), and/or an interaction date and timestamp.

Step 310 may include identifying, by the at least one processor, based on the electronic interaction data, a plurality of interaction identifiers associated with the plurality of interaction partners. For example, the server 115 may parse the electronic interaction data for interaction identifiers. An interaction identifier may be a unique string of characters specific to each interaction. Step 315 may include retrieving, from a plurality of databases, using the plurality of interaction identifiers, mission-value data for each of the plurality of interaction partners. The retrieved mission-value data may be performance data associated with an interaction partner with respect to one or more of the user's missions of interest. The mission-value data may be accessed from third party databases 125, such as publically available databases.

The server 115 may retrieve mission-value data that is specific to the user's selected mission(s) of interest. Depending on the specific mission of interest, the retrieved mission-value data may include information associated with an interaction partner's certifications, such as organic and fair-trade certifications. Additionally or alternatively, mission-value data may include information associated with an interaction partner's compliance and/or commitment to specific issues or concerns. For example, the mission-value data for an interaction partner may include data associated with environmental stewardship, such as, for example, data associated with a commitment to climate change (e.g., reducing carbon footprint), sustainable practices, pollution reduction (e.g., air and water) and/or waste reduction, such as single use plastics. In certain embodiments, mission-value data may include customer reviews of an interaction partner and/or published articles of the interaction partner. In one example, if a user's selected mission of interest is a commitment to data security, the retrieved mission-value data may include scores and metrics measured by third party assessors.

Step 320 may include identifying, by the at least one processor, based on the retrieved data, which of the plurality of interaction partners align with the mission of interest to the user. The mission-value data may include objective, publically available benchmarking data associated with the user's selected mission of interest. The benchmarking data may be statistics or metrics compiled by a third party. The server 115 may compare the retrieved mission-value data for an interaction partner to an objective, publically available metric for the user's mission of interest.

In some embodiments, mission-value data may include articles, publications, and/or reviews of a particular interaction partner. The server 115 may parse and analyze the mission-value data to determine whether an interaction partner aligns or likely aligns with the user's mission of interest. In other embodiments, the server 115 may retrieve a score associated with an interaction partner's performance, as measured by a third party assessment tool. In these embodiments, the server 115 may determine whether the interaction partner aligns with the user's mission of interest based on the retrieved score and associated considerations (and sub-considerations), as provided by the third party's assessment of the interaction partner's performance.

Step 325 may include generating the interactive GUI for display at the user's user computing device 105. The interactive GUI may include a section displaying the plurality of interactions and the plurality of interaction partners. The plurality of interactions may be recent interactions of the user. The section may identify each interaction partner that aligns with the user's mission of interest. For example, the interactive GUI may display a symbol next to each interaction partner, such as symbol 220 (FIG. 2A).

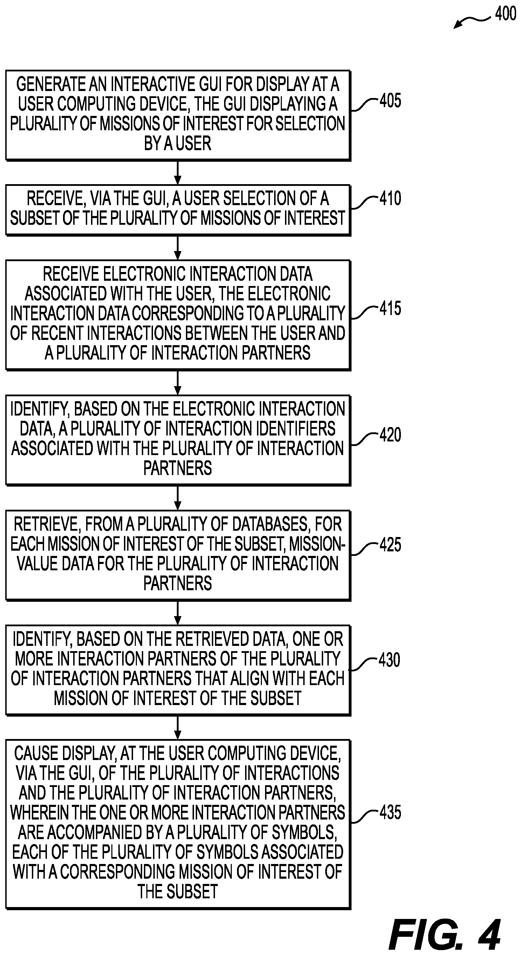

FIG. 4 is a flowchart illustrating another method 400 of providing an interactive GUI (as shown in FIGS. 2A-2C) detailing mission-value data for a user associated with the user computing device 105, according to one or more embodiments of the present disclosure (FIG. 1). The method 400 may be performed by computer server 115 in communication with the user computing device 105 (FIG. 1). Step 405 may include generating, by at least one processor, an interactive GUI for display at the user computing device. The GUI may display a plurality of missions of interest for selection by the user, such as one or more of the missions of interest described above.

Step 410 may include receiving, by the at least one processor, via the GUI, a user selection of a subset of the plurality of missions of interest. For example, the user may select two or more missions of interest from a list of missions of interest provided via the interactive GUI. Step 415 may include receiving, by the at least one processor, electronic interaction data associated with the user. The electronic interaction data may correspond to a plurality of recent interactions between the user and a plurality of interaction partners, as described above. Step 420 may include identifying, by the at least one processor, based on the electronic interaction data, a plurality of interaction identifiers associated with the plurality of interaction partners.

Step 425 may include retrieving, from a plurality of databases, for each mission of interest of the subset, mission-value data for the plurality of interaction partners. The server 115 may retrieve mission-value data as described above with respect to FIG. 3. Step 430 may include identifying, by the at least one processor, based on the retrieved data, one or more interaction partners of the plurality of interaction partners that align with each mission of interest of the subset. The server 115 may identify the one or more interaction partners as described above with respect to FIG. 3.

Step 435 may include causing display, at the user computing device 105, via the GUI, of the plurality of interactions and the plurality of interaction partners. The one or more interaction partners may be accompanied by a plurality of symbols. Each of the plurality of symbols may be associated with a corresponding mission of interest of the subset. As described above with respect to FIGS. 2A-2C, the user may designate a symbol for each selected mission of interest.

The disclosed embodiments herein provide techniques that improve upon at least some known systems by generating an interactive GUI that provides relevant data specific to a user's spending and values in a simplified, user-friendly manner. A user interested in transacting at interaction partners that align with their beliefs and values would most likely have to go through their spending (e.g., transaction) history, and compare it with publically available data on various interaction partners to build some understanding of their spending in the context of their beliefs and values. This process may be labor intensive, time consuming, and slow. Further, this process may require numerous resources and may be prone to human error (e.g., the user may be unaware of a pertinent list, table, and/or data source that provides insight on an interaction partner's values and/or may not update the process to include new information).

Further, executing multiple applications and/or opening a number of web browser tabs on the user's user computing device each time the user wishes to understand and track their spending may not only be cumbersome and difficult for a user, but may also unnecessarily consume the user computing device's memory, reduce the user computing device's overall processor speed, and/or drain the battery power. The embodiments disclosed herein address the technical problems described above by analyzing a user's interaction data on a regular basis and filtering through publically available data associated with interaction partners and their missions and values to provide an interactive GUI that automatically (i) identifies recent interactions with interaction partners that align with the user's specific values and/or beliefs, (ii) provides information regarding an interaction partner's performance with respect to the user's values and/or beliefs (e.g., the considerations and sub-considerations assessed by a reputable third party benchmarking tool as well as URLs directing the user to third party websites to learn more about the benchmarking tool and/or the interaction partner), (iii) provides recommendations for alternative interaction partners that align with the user's specific values and/or beliefs based on the user's spending, and (iv) provides user-specific analytics, such as trends (over a period of time), that measure how often (and how much) the user spends at places that align with their values and/or beliefs.

Thus, the embodiments disclosed herein improve the speed of the user's navigation through various windows and minimizes the unnecessary use of computational resources, thereby reducing latency, improving network speed, and improving the user computing device's processor speed, memory, and battery life.

Further aspects of the disclosure are discussed in the additional embodiments below. It should be understood that embodiments in this disclosure are exemplary only, and that other embodiments may include various combinations of features from other embodiments, as well as additional or fewer features.

In general, any process discussed in this disclosure that is understood to be computer-implementable, such as the process illustrated in FIGS. 3 and 4, may be performed by one or more processors of a computer server, such as computer server 115, as described above. A process or process step performed by one or more processors may also be referred to as an operation. The one or more processors may be configured to perform such processes by having access to instructions (e.g., software or computer-readable code) that, when executed by the one or more processors, cause the one or more processors to perform the processes. The instructions may be stored in a memory of the computer server. A processor may be a central processing unit (CPU), a graphics processing unit (GPU), or any suitable types of processing unit.

A computer system, such as computer server 115, may include one or more computing devices. If the one or more processors of the computer system are implemented as a plurality of processors, the plurality of processors may be included in a single computing device or distributed among a plurality of computing devices. If a computer server 115 comprises a plurality of computing devices, the memory of the computer server 115 may include the respective memory of each computing device of the plurality of computing devices.

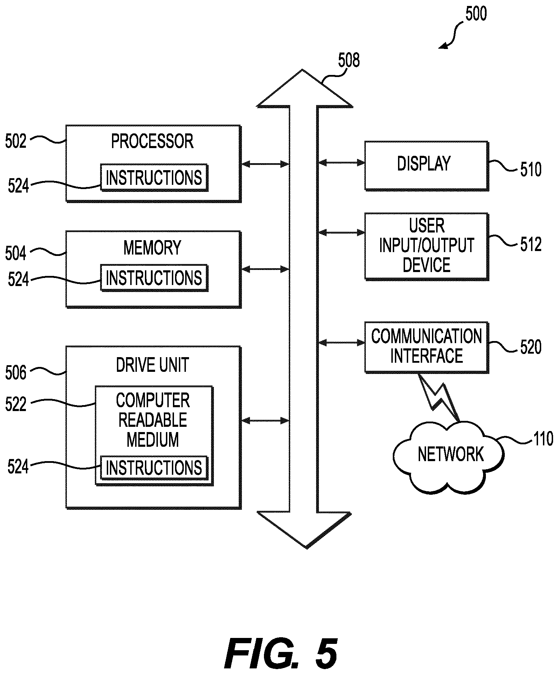

FIG. 5 is a simplified functional block diagram of a computer system 500 that may be configured as a computing device for executing the methods of FIGS. 3 and 4, according to exemplary embodiments of the present disclosure. FIG. 5 is a simplified functional block diagram of a computer that may be configured as the computer server 115 according to exemplary embodiments of the present disclosure. In various embodiments, any of the systems herein may be an assembly of hardware including, for example, a data communication interface 520 for packet data communication. The platform also may include a central processing unit ("CPU") 502, in the form of one or more processors, for executing program instructions. The platform may include an internal communication bus 508, and a storage unit 506 (such as ROM, HDD, SDD, etc.) that may store data on a computer readable medium 522, although the system 500 may receive programming and data via network communications. The system 500 may also have a memory 504 (such as RAM) storing instructions 524 for executing techniques presented herein, although the instructions 524 may be stored temporarily or permanently within other modules of system 500 (e.g., processor 502 and/or computer readable medium 522). The system 500 also may include input and output ports 512 and/or a display 510 to connect with input and output devices such as keyboards, mice, touchscreens, monitors, displays, etc. The various system functions may be implemented in a distributed fashion on a number of similar platforms, to distribute the processing load. Alternatively, the systems may be implemented by appropriate programming of one computer hardware platform.

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

While the presently disclosed methods, devices, and systems are described with exemplary reference to generating an interactive GUI detailing mission-value data for a user, it should be appreciated that the presently disclosed embodiments may be applicable to transmitting data and may be applicable to any environment, such as a desktop or laptop computer, a banking environment, a kiosk environment, etc. Also, the presently disclosed embodiments may be applicable to any type of Internet protocol.

Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

In general, any process discussed in this disclosure that is understood to be performable by a computer may be performed by one or more processors. Such processes include, but are not limited to: the processes shown in FIGS. 3 and 4, and the associated language of the specification. The one or more processors may be configured to perform such processes by having access to instructions (computer-readable code) that, when executed by the one or more processors, cause the one or more processors to perform the processes. The one or more processors may be part of a computer system (e.g., one of the computer systems discussed above) that further includes a memory storing the instructions. The instructions also may be stored on a non-transitory computer-readable medium. The non-transitory computer-readable medium may be separate from any processor. Examples of non-transitory computer-readable media include solid-state memories, optical media, and magnetic media.

It should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Thus, while certain embodiments have been described, those skilled in the art will recognize that other and further modifications may be made thereto without departing from the spirit of the invention, and it is intended to claim all such changes and modifications as falling within the scope of the invention. For example, functionality may be added or deleted from the block diagrams and operations may be interchanged among functional blocks. Steps may be added or deleted to methods described within the scope of the present invention.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations are possible within the scope of the disclosure. Accordingly, the disclosure is not to be restricted except in light of the attached claims and their equivalents.

## Claims

1. A computer-implemented method of providing an interactive graphical user interface (GUI) detailing mission-value data for a user associated with a user computing device, the method comprising:
receiving, by at least one processor, electronic interaction data associated with the user, the electronic interaction data corresponding to a plurality of interactions between the user and a plurality of interaction partners;
identifying, by the at least one processor, based on the electronic interaction data, a plurality of interaction identifiers associated with the plurality of interaction partners;
retrieving, from a plurality of databases, using the plurality of interaction identifiers, mission-value data for each of the plurality of interaction partners, the retrieved data associated with a mission of interest to the user;
identifying, by the at least one processor, based on the retrieved data, which of the plurality of interaction partners align with the mission of interest to the user; and
generating the interactive GUI for display at the user computing device, the interactive GUI including a section displaying the plurality of interactions and the plurality of interaction partners, the section identifying each of the plurality of interaction partners that align with the mission of interest to the user.

2. The computer-implemented method of claim 1, wherein identifying which of the plurality of interaction partners align with the mission of interest further comprises comparing the retrieved data for each of the plurality of interaction partners to an objective, publically available metric.

3. The computer-implemented method of claim 1, wherein the mission-value data includes information from at least one of Human Rights Campaign (HRC) Corporate Equality Index, Diversity Best Practices (DBP) Inclusion Index, or Climate Counts Company Scorecard.

4. The computer-implemented method of claim 1, wherein each of the plurality of interaction partners that align with the mission of interest is identified with a symbol, and wherein the method further comprises:
causing the GUI to be displayed at the user computing device;
receiving, from the user computing device, via the GUI, a user selection of one of the plurality of interaction partners accompanied by the symbol; and
in response to the user selection, causing display at the user computing device, via the GUI, of the mission-value data for the one of the plurality of interaction partners.

5. The computer-implemented method of claim 4, wherein the section of the interactive GUI is a first section, and wherein causing display of the mission-value data, via the GUI, further comprises causing display of a second section including an HRC Corporate Equality Index score associated with the mission-value data for the one of the plurality of interaction partners.

6. The computer-implemented method of claim 4, wherein causing display of the mission-value data, via the GUI, further comprises providing performance and practice data associated with the one of the plurality of interaction partners.

7. The computer-implemented method of claim 4, wherein causing display of the mission-value data, via the GUI, further comprises causing display of one or more Uniform Resource Locators (URLs) associated with the mission-value data and the one of the plurality of interaction partners.

8. The computer-implemented method of claim 1, further comprising:
causing display, via the GUI, of a visual representation of a total number of interactions, within a period of time, that align with the mission of interest to the user.

9. The computer-implemented method of claim 1, further comprising:
generating a user recommendation to at least one of (i) select an additional mission of interest and (ii) interact with a specific interaction partner based on the plurality of interactions.

10. The computer-implemented method of claim 1, further comprising:
receiving, from the user computing device, via the GUI, a user selection of a plurality of missions of interest to the user; and
in response to the user selection, updating the GUI, in real time, to identify one or more of the plurality of interaction partners that align with each of the plurality of missions of interest.

11. The computer-implemented method of claim 10, wherein each of the plurality of missions of interest is associated with a unique symbol, and wherein the method further comprises:
causing display, via the GUI, of the unique symbol next to each interaction partner that aligns with the corresponding mission of interest.

12. The computer-implemented method of claim 1, further comprising:
identifying, based on the retrieved data, at least one interaction partner of the plurality of interaction partners that do not align with the mission of interest to the user;
generating a recommendation for an alternative interaction partner of similar category and location to the at least one interaction partner; and
causing display, via the GUI, of the generated recommendation for the alternative interaction partner to the user.

13. A computer system for providing an interactive graphical user interface (GUI) detailing mission-value data for a user associated with a user computing device, the computer system comprising:
a memory storing instructions; and
at least one processor configured to execute the instructions to perform operations including:
receiving electronic interaction data associated with the user, the electronic interaction data corresponding to a plurality of interactions between the user and a plurality of interaction partners;
identifying, based on the electronic interaction data, a plurality of interaction identifiers associated with the plurality of interaction partners;
retrieving, from a plurality of databases, using the plurality of interaction identifiers, mission-value data for each of the plurality of interaction partners, the retrieved data associated with a mission of interest to the user;
identifying, based on the retrieved data, which of the plurality of interaction partners align with the mission of interest to the user; and
generating the interactive GUI for display at the user computing device, the interactive GUI including a section displaying the plurality of interactions and the plurality of interaction partners, the section identifying each of the plurality of interaction partners that align with the mission of interest to the user.

14. The computer system of claim 13, wherein identifying which of the plurality of interaction partners align with the mission of interest further comprises comparing the retrieved data for each of the plurality of interaction partners to an objective, publically available metric.

15. A computer-implemented method of providing an interactive graphical user interface (GUI) detailing mission-value data for a user associated with a user computing device, the method comprising:
generating, by at least one processor, an interactive GUI for display at the user computing device, the GUI displaying a plurality of missions of interest for selection by the user;
receiving, by the at least one processor, via the GUI, a user selection of a subset of the plurality of missions of interest;
receiving, by the at least one processor, electronic interaction data associated with the user, the electronic interaction data corresponding to a plurality of recent interactions between the user and a plurality of interaction partners;
identifying, by the at least one processor, based on the electronic interaction data, a plurality of interaction identifiers associated with the plurality of interaction partners;
retrieving, from a plurality of databases, for each mission of interest of the subset, mission-value data for the plurality of interaction partners;
identifying, by the at least one processor, based on the retrieved data, one or more interaction partners of the plurality of interaction partners that align with each mission of interest of the subset; and
causing display, at the user computing device, via the GUI, of the plurality of interactions and the plurality of interaction partners, wherein the one or more interaction partners are accompanied by a plurality of symbols, each of the plurality of symbols associated with a corresponding mission of interest of the subset.
